(19) Europäisches Patentamt
European Patent Office
Office européen des brevets

(11) Veröffentlichungsnummer: **0 033 443**
**B1**

(12) # EUROPÄISCHE PATENTSCHRIFT

(45) Veröffentlichungstag der Patentschrift: **08.05.85**

(51) Int. Cl.⁴: **C 09 B 29/26**, C 09 B 43/42 // D06P1/18

(21) Anmeldenummer: **81100225.2**

(22) Anmeldetag: **14.01.81**

(54) **Azofarbstoffe sowie deren Herstellung und Verwendung zum Färben von Synthesefasern.**

(30) Priorität: **29.01.80 DE 3003012**

(43) Veröffentlichungstag der Anmeldung: **12.08.81 Patentblatt 81/32**

(45) Bekanntmachung des Hinweises auf die Patenterteilung: **08.05.85 Patentblatt 85/19**

(84) Benannte Vertragsstaaten: **CH DE FR GB LI**

(56) Entgegenhaltungen:
**DE - A - 2 916 137**
**FR - A - 1 430 539**
**FR - A - 2 413 442**
**GB - A - 2 034 736**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Hamprecht, Rainer, Dr., Im Kerberich 25, D-5068 Odenthal-Blecher (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

**Beschreibung**

Gegenstand der Erfindung sind Azofarbstoffe der Formel (I)

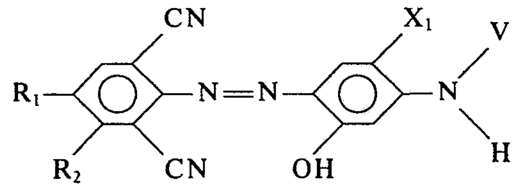

(I)

worin

$R_1$ für F, Cl, Br, J, $CF_3$, $C_1-C_8$-Alkyl, Cycloalkyl, $-NO_2$, $-CN$, $-SO_2CF_3$, —CO-Alkyl ($C_1-C_4$),

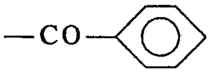

$-CO_2$-Alkyl ($C_1-C_8$), —NH-Alkyl ($C_1-C_4$), —N (Alkyl-$C_1-C_4$)$_2$, —NHCO-Alkyl ($C_1-C_6$), $NHSO_2$-Alkyl ($C_1-C_4$),

$R_2$ für H, Cl, Br oder $CH_3$,

$X_1$ für H, Cl oder Br,

V für $C_1-C_6$-Alkyl, gegebenenfalls substituiert durch Cl, Br und Alkoxy ($C_1-C_4$) oder für

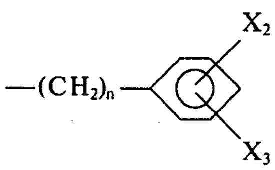

n für 0, 1 und 2

$X_2$, $X_3$ für H, Cl, Br, $CH_3$ oder $C_2H_5$ stehen,

wobei zumindest einer der Reste $X_1$, $X_2$ und $X_3$ Cl oder Br bedeutet, mit Ausnahme der Verbindungen der Formeln

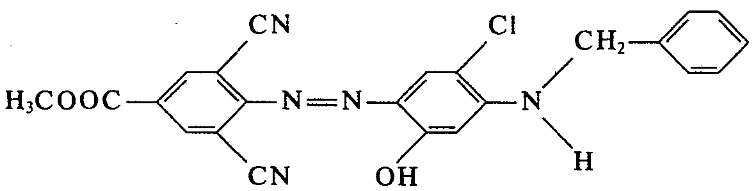

und

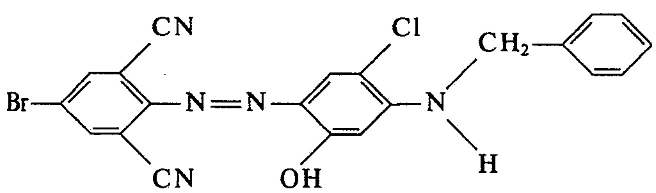

Besonders bevorzugte Farbstoffe sind solche der Formel (I), worin

$R_1$ für Cl, Br, $-CF_3$ oder $-CO_2$-Alkyl ($C_1-C_8$),

V für 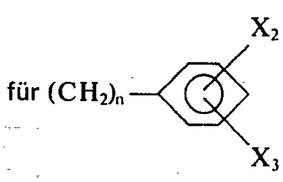

und

n für 0 oder 1 stehen und die übrigen Reste die obengenannte Bedeutung tragen und wobei die obengenannten Ausnahmen gelten.

Unter diesen Farbstoffen sind wiederum solche bevorzugt, bei denen

$X_1$ für Wasserstoff und

V für 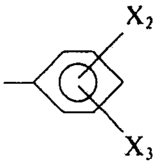 stehen, bzw. solche, bei denen

$X_1$ für Cl oder Br und

V für 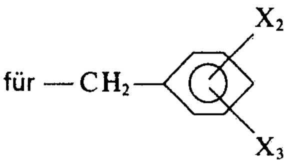 stehen und wobei die obengenannten Maßangaben gelten.

Weitere bevorzugte Farbstoffe sind solche der Formel (I), worin

$X_1$ für Brom steht und die übrigen Reste die obengenannte Bedeutung ohne Ausnahmen besitzen

oder solche der Formel (I), worin

$R_2$ für $CH_3$ steht und die übrigen Reste die obengenannte Bedeutung ohne Ausnahmen besitzen

oder solche der Formel (I), worin

$X_2/X_3$ für Cl, Br, $CH_3$ oder $C_2H_5$ stehen und die übrigen Reste die obengenannte Bedeutung ohne Ausnahmen besitzen,

oder solche der Formel (I), worin

$R_1$ für Cl, $CF_3$ oder $CO_2$-n-Alkyl ($C_2$–$C_4$) stehen und die übrigen Reste die obengenannte Bedeutung ohne Ausnahmen besitzen.

»Sperrige« Reste befinden sich dabei in solchen Positionen, wo sie keine sterische Hinderung bewirken.

Die Herstellung der neuen Azofarbstoffe der Formel (I) kann auf verschiedene Weise erfolgen, z. B. durch Kupplung diazotierter Aniline der Formel (II)

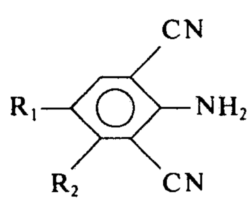

(II)

auf Kupplungskomponenten der Formel (III)

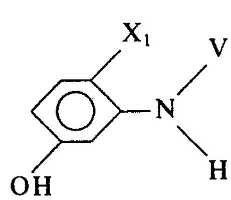

(III)

worin die Reste die obengenannte Bedeutung haben.

Vorzugsweise stellt man die Farbstoffe der Formel (I) durch Umsetzung der entsprechenden o-Halogenazofarbstoffe der Formel

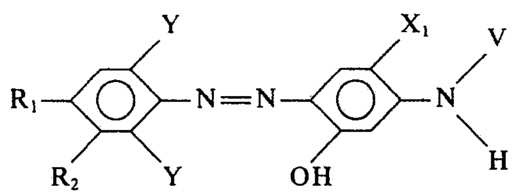

(IV)

worin

Y für Halogenatome (Cl, Br, J), vorzugsweise Cl und besonders Br steht, und die übrigen Reste die obengenannte Bedeutung haben, mit gegebenenfalls komplexen Kupfer-I-cyaniden oder diese Cyanide bildenden Systemen oder beliebigen Gemischen bzw. Cyanid-generatoren in Gegenwart von Kupfer-I-Verbindungen.

Diese Austauschreaktion ist an sich bekannt und beispielsweise in folgender Patentliteratur beschrieben:

DE-A 1 544 563 = GB-A 1 125 683
DE-A 2 341 109
DE-A 2 456 495
DE-A 2 759 103

Besonders bevorzugt ist die Verwendung einer Mischung aus CuCN und $Zn(CN)_2$ gemäß DE-A 2 456 495 bzw. der Austausch im wäßrigen Medium mit gegebenenfalls in situ hergestellten Alkalicyanidkomplexen des einwertigen Kupfers der Formel

$Me_pCu(CN)_{p+1}$

wobei

Me = Alkalimetallatom
p = 1 − 3 (vorzugsweise 1).

Die erfindungsgemäßen, praktisch wasserunlöslichen Azofarbstoffe eignen sich vorzugsweise zum Färben von synthetischen Textilmaterialien, insbesondere Textilmaterialien aus sekundärem Celluloseacetat und Cellulosetriacetat, Polyamid, wie z. B. Polyhexamethylenadipamid, und ganz besonders aromatischem Polyester, wie z. B. Polyethylenterephthalat nach den für diese Faserarten üblichen Färbemethoden unter Verwendung wäßriger oder nicht wäßriger Flotten.

Die Farbstoffe können schließlich auch auf synthetische Textilmaterialien durch Transferdruck aufgebracht werden.

Die erhaltenen Färbungen zeichnen sich bei guten Licht-, Naß- und Sublimierechtheiten durch besonders klare Farbtöne aus.

## Beispiel 1

Herstellung des Farbstoffs der Formel

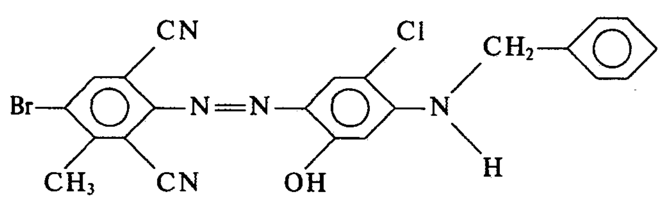

a) 10 g 2.4.6-Tribrom-3-methylanilin wurden in einer Mischung von 15 ml Wasser und 18 ml konz. Schwefelsäure suspendiert und bei 38–40°C mit 5,2 ml 42-proz. Nitrosylschwefelsäurelösung diazotiert. Man rührte noch eine Stunde bei 40°C und fügte dann die Lösung der Diazokomponente zu einer eiskalten Lösung von 7,1 g 3-Benzylamino-4-chlorphenol in 100 ml Eisessig und 20 ml einer 10 proz. Amidosulfonsäurelösung. Durch Zugabe von Natriumacetat wurde auf pH = 1 gestellt. Man ließ bei 0–5°C auskuppeln, saugte ab und wusch mit Wasser neutral. Nach Trocknen im Vakuum wurden 13,6 g eines orangefarbigen Pulvers erhalten.
Die eingesetzte Kupplungskomponente wurde durch Reduktion von 3-Nitro-4-chlorphenol und Alkylierung mit Benzylchlorid in wäßrig-organischem, schwach saurem Medium (pH ≈ 5–6) erhalten.

b) 11,8 g des nach a) erhaltenen 3-Hydroxy-4-(2', 4',6'-tribrom-3'-methyl-phenylazo)-5-chlor-N-benzylanilins, 0,18 g Kupfer-I-cyanid und 2,25 g Zinkcyanid wurden in 30 ml Dimethylformamid suspendiert und unter Rühren 2,5 Stunden auf 80°C erwärmt. Nach Abkühlen auf Raumtemperatur wurde mit 40 ml Methanol verdünnt, abgesaugt, mit 10-proz. Salzsäure und Wasser nachgewaschen und dann getrocknet. Ausbeute 7,5 g ($\lambda_{max}$ = 501 nm).
Das Massenspektrum zeigt die Massen 379, 380, 381, 382 und 383 mit den Intensitäten 9,7 %, 3,0 %, 12,4 %, 3,4 % und 4,4 %; Masse 91 (Benzyl) mit 100 %. Der Farbstoff färbt Polyester in klarem rotstichigem Orange mit sehr guter Licht- und Sublimierechtheit bei gutem Ziehvermögen.

## Beispiel 2

Herstellung des Farbstoffs der Formel

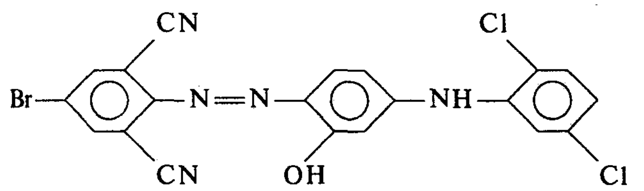

a) 9,6 g 2.4.6-Tribromanilin werden in einer Mischung von 20 ml Wasser und 18 ml konz. Schwefelsäure suspendiert und bei 38–40°C mit 5,2 ml 42-proz. Nitrosylschwefelsäurelösung diazotiert. Man rührt eine Stunde bei dieser Temperatur nach und gießt dann die Lösung der Diazokomponente zu einer eiskalten Lösung von 8,5 g 2,5-Dichlor-3'-hydroxy-N,N-diphenylamin in 150 ml Methanol und 20 ml einer 10 proz. Amidosulfonsäurelösung. Man verdünnt mit 100 ml Eiswasser und stellt mit Natriumacetat auf pH = 2. Man saugt 15 g eines gelb-orange-farbigen Pulvers ab. Die eingesetzte Kupplungskomponente wird durch Kondensation von Resorcin mit 2,5-Dichloranilin bei 180°C in Gegenwart von p-Toluolsulfonsäure gewonnen. Das Rohprodukt wird in üblicher Weise gereinigt.

b) 11,9 g des nach a) erhaltenen 2,5-Dichlor-3'-hydroxy-4'-(2",4",6"-tribromphenylazo)-N,N-diphenylamins, 0,36 g Kupfer-I-cyanid und 2,1 g Zinkcyanid werden in 30 ml Dimethylformamid suspendiert und unter Rühren 30 Minuten auf 100°C erwärmt. Nach Abkühlen auf Raumtemperatur wird mit 30 ml Methanol verdünnt. Man läßt 12 Stunden bei Raumtemperatur stehen, saugt ab und wäscht mit 10-proz. Salzsäure und Wasser. Man erhält 7,3 g des Cyanazofarbstoffes, der Polyester in klarem Scharlach mit sehr guter Licht- und Sublimierechtheit färbt.

| Beispiel Nr. | Formel | Farbton auf Polyester |
|---|---|---|
| 3 | 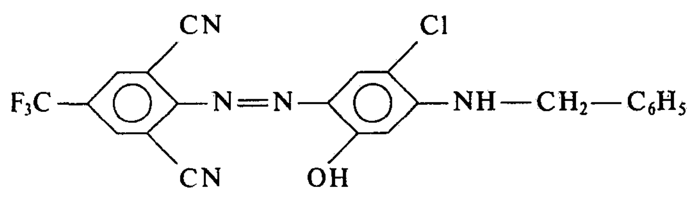 | Scharlach |
| 4 | 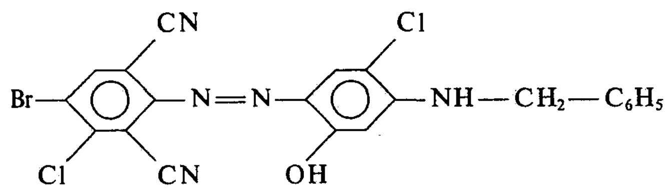 | Scharlach |
| 5 | 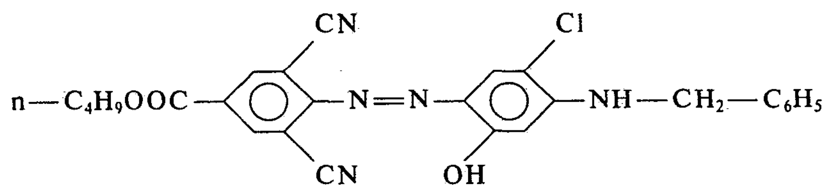 | Rot |

Fortsetzung

| Beispiel Nr. | Formel | Farbton auf Polyester |
|---|---|---|
| 6 | 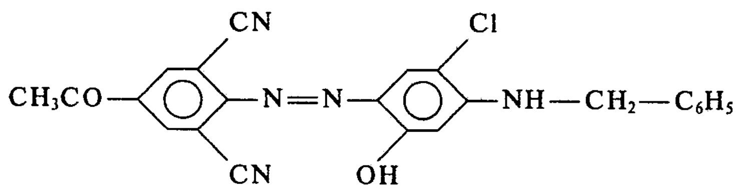 | Rot |
| 7 | 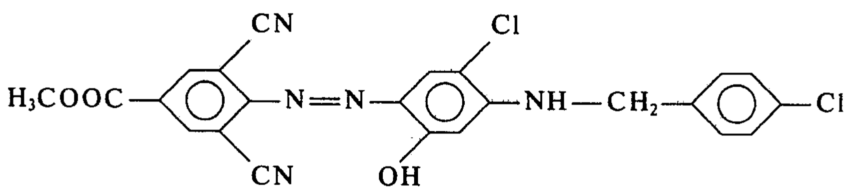 | Rot |
| 8 | 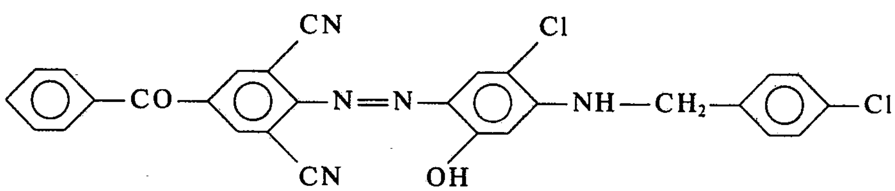 | Rot |
| 9 | 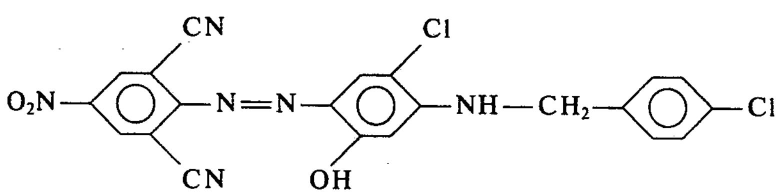 | Rubin |
| 10 | 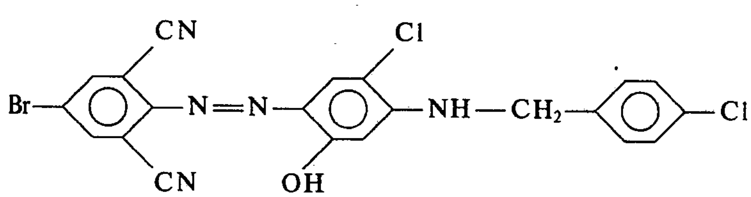 | Scharlach |
| 11 | 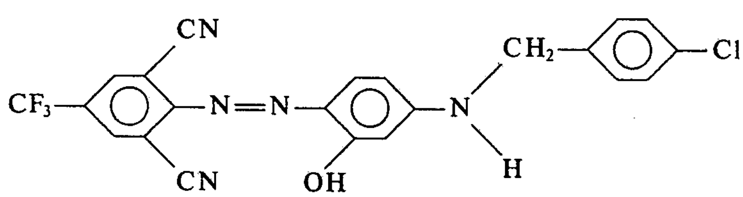 | Scharlach |
| 12 | 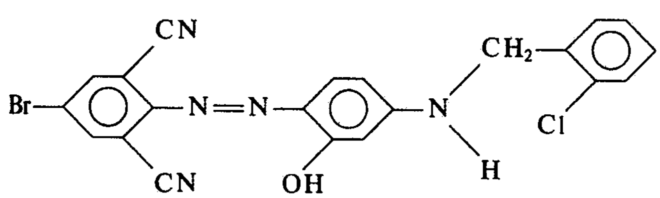 | Scharlach |
| 13 | 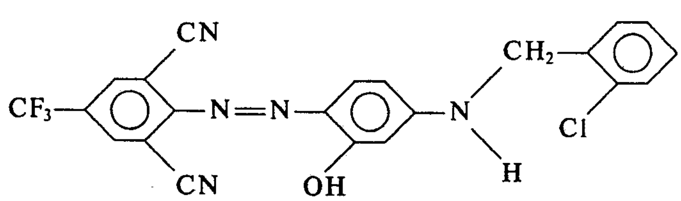 | Scharlach |

Fortsetzung

| Beispiel Nr. | Formel | Farbton auf Polyester |
| --- | --- | --- |
| 14 | 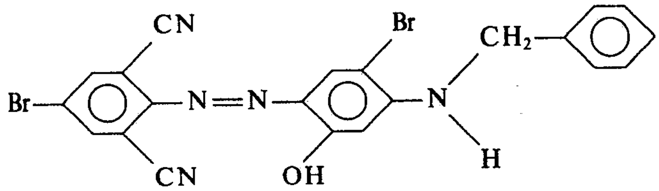 | Scharlach |
| 15 | 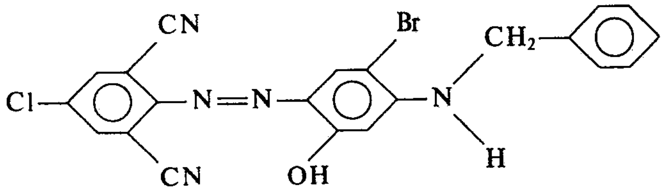 | Scharlach |
| 16 | 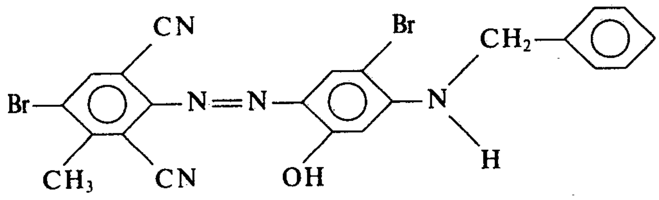 | Scharlach |
| 17 | 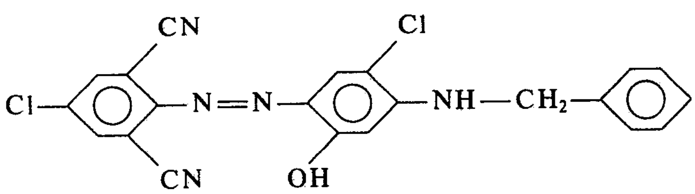 | Scharlach |
| 18 | 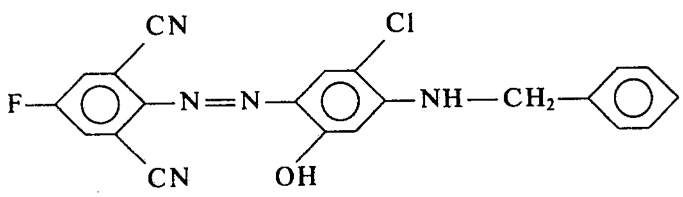 | Scharlach |
| 19 | 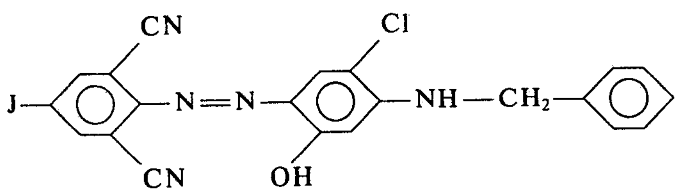 | Scharlach |
| 20 | 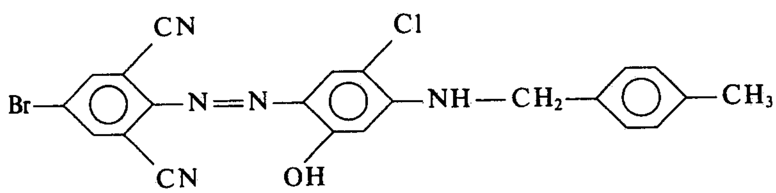 | Scharlach |
| 21 | 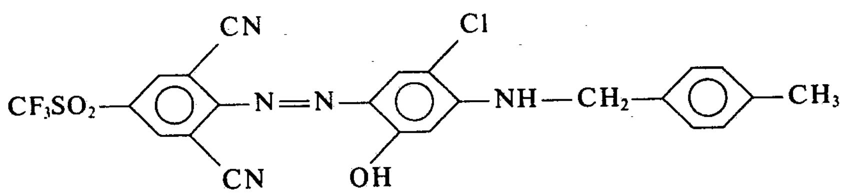 | Rubin |

Fortsetzung

| Beispiel Nr. | Formel | Farbton auf Polyester |
|---|---|---|
| 22 | 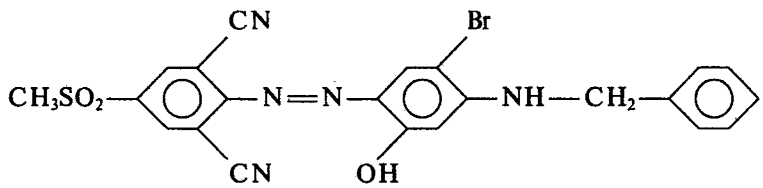 | Rot |
| 23 | 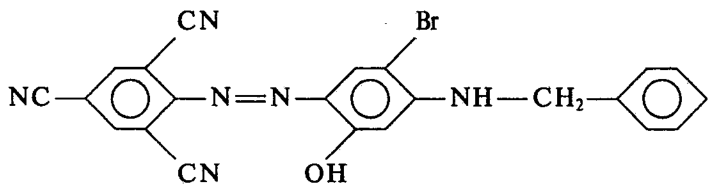 | Rot |
| 24 | 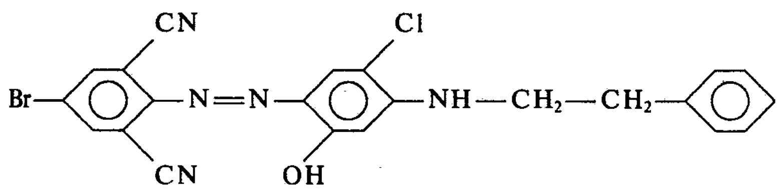 | Scharlach |
| 25 | 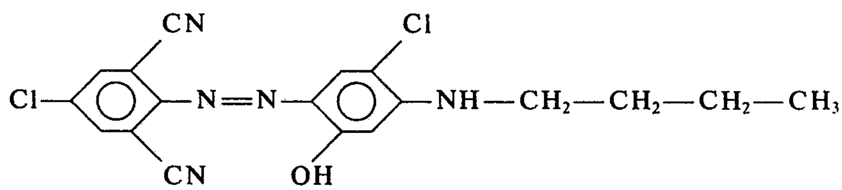 | Scharlach |
| 26 | 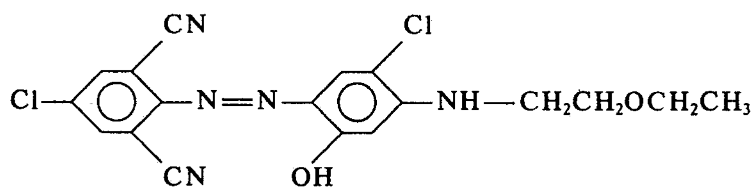 | Scharlach |
| 27 | 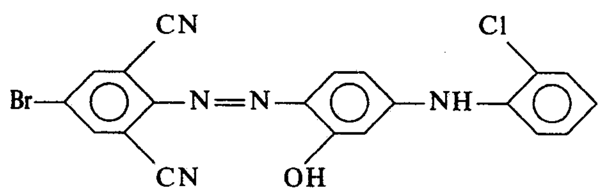 | Scharlach |
| 28 | 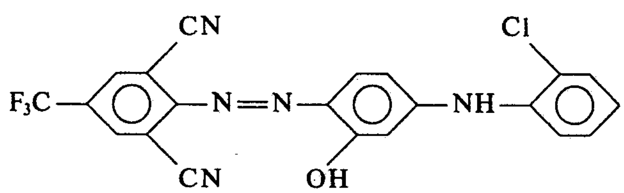 | Rot |
| 29 | 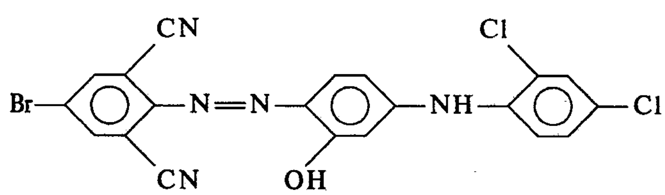 | Scharlach |

Fortsetzung

| Beispiel Nr. | Formel | Farbton auf Polyester |
|---|---|---|
| 30 | 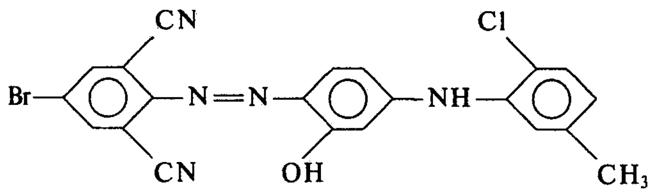 | Rot |
| 31 | 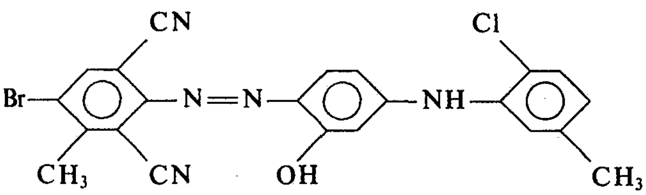 | Rot |
| 32 | 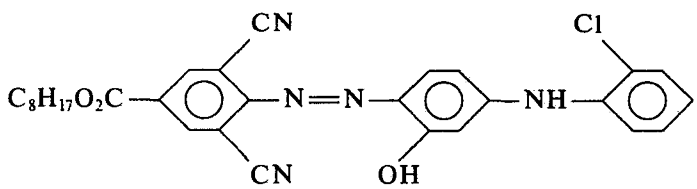 | Rot |
| 33 | 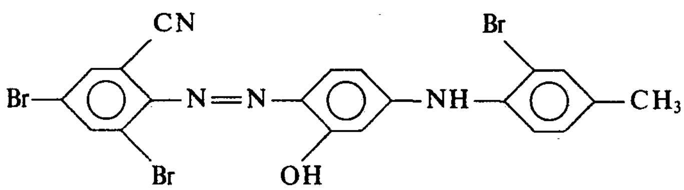 | Scharlach |
| 34 | 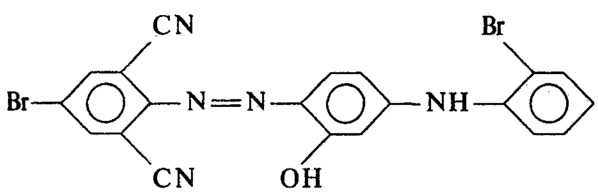 | Scharlach |
| 35 | 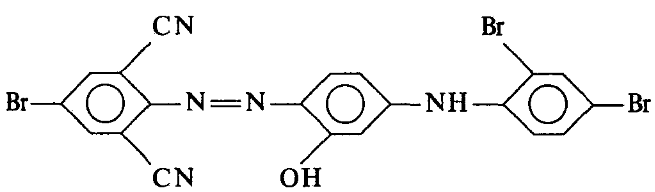 | Scharlach |

**Patentansprüche**

1. Azofarbstoffe der Formel

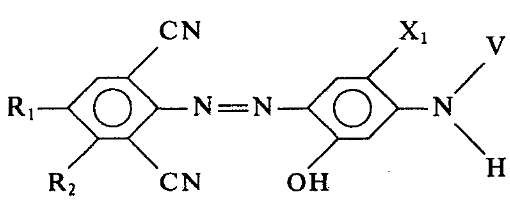

worin

$R_1$ für F, Cl, Br, J, $CF_3$, $C_1$–$C_8$-Alkyl, Cycloalkyl, $-NO_2$, $-CN$, $-SO_2CF_3$, $-CO$-Alkyl ($C_1$–$C_4$),

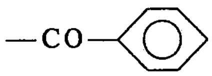

— $CO_2$-Alkyl ($C_1$–$C_8$), — NH-Alkyl ($C_1$–$C_4$), — N (Alkyl-$C_1$–$C_4$)$_2$, — NHCO-Alkyl ($C_1$–$C_6$), $NHSO_2$-Alkyl ($C_1$–$C_4$),

$R_2$ für H, Cl, Br oder $CH_3$,

$X_1$ für H, Cl oder Br,

V für $C_1$–$C_6$-Alkyl, gegebenenfalls substituiert durch Cl, Br und Alkoxy ($C_1$–$C_4$) oder für

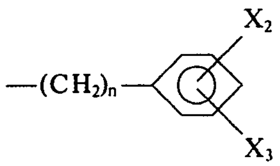

n für 0, 1 und 2

$X_2$, $X_3$ für H, Cl, Br, $CH_3$ oder $C_2H_5$ stehen,

wobei zumindest einer der Reste $X_1$, $X_2$ und $X_3$ Cl oder Br bedeutet, mit Ausnahme der Verbindungen der Formeln

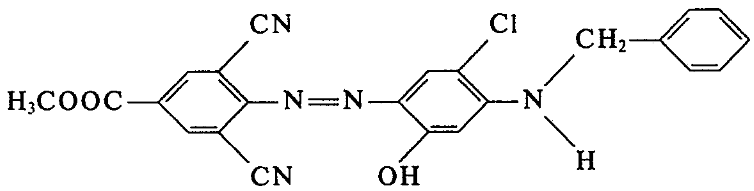

und

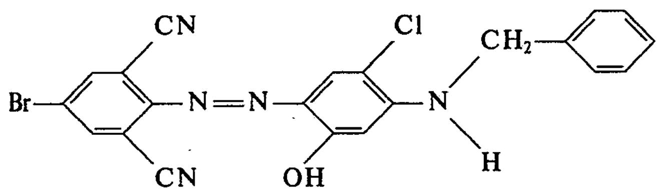

2. Azofarbstoffe gemäß Anspruch 1, dadurch gekennzeichnet, daß

$R_1$ für Cl, Br, — $CF_3$ oder — $CO_2$-Alkyl ($C_1$–$C_8$),

V für 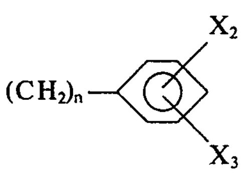

und

n für 0 oder 1 stehen und die übrigen Reste die obengenannte Bedeutung tragen und wobei die obengenannten Ausnahmen gelten.

3. Azofarbstoffe gemäß Ansprüchen 1 oder 2, dadurch gekennzeichnet, daß

$X_1$ für Wasserstoff und

V für 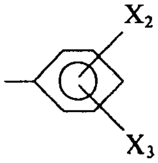 stehen,

und wobei die in Anspruch 1 genannten Ausnahmen gelten.

4. Azofarbstoffe gemäß Ansprüchen 1 und 2, dadurch gekennzeichnet, daß

$X_1$ für Cl oder Br und

V für 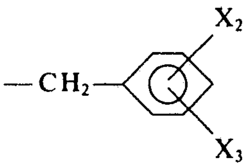 stehen und wobei die in Anspruch 1 genannten Ausnahmen gelten.

5. Azofarbstoffe gemäß Anspruch 1, dadurch gekennzeichnet, daß

$R_2$ für $CH_3$ steht und

die übrigen Reste die in Anspruch 1 angegebenen Bedeutungen ohne Ausnahmen besitzen.

6. Azofarbstoffe gemäß Anspruch 1, dadurch gekennzeichnet, daß

$X_2/X_3$ für Cl, Br, $CH_3$ oder $C_2H_5$ stehen

und die übrigen Reste die in Anspruch 1 angegebenen Bedeutungen ohne Ausnahmen besitzen.

7. Azofarbstoff gemäß Anspruch 1, dadurch gekennzeichnet, daß

$R_1$ = Br, $R_2$ = $CH_3$; $X_1$ = Cl und V = Benzyl.

8. Verfahren zur Herstellung von Azofarbstoffen gemäß Anspruch 1, dadurch gekennzeichnet, daß man diazotierte Aniline der Formel

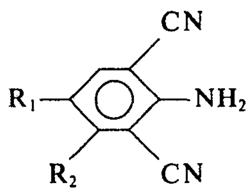

auf Kupplungskomponenten der Formel

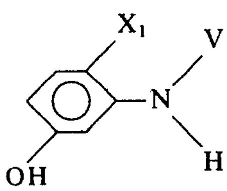

kuppelt, oder in o-Halogenazofarbstoffe der Formel

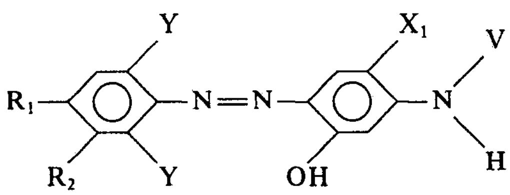

worin Y für Halogen, vorzugsweise Brom, steht, die Halogenatome in an sich bekannter Weise gegen Cyangruppen austauscht.

9. Verwendung der Azofarbstoffe gemäß Anspruch 1 zum Färben und Bedrucken von Synthesefasern.

**Claims**

1. Azo dyestuffs of the formula

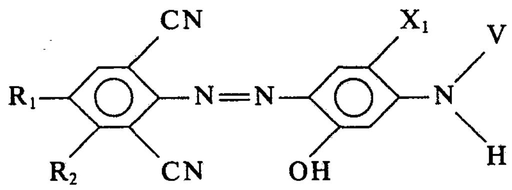

wherein

$R_1$ represents F, Cl, Br, I, $CF_3$, $C_1$–$C_8$-alkyl, cycloalkyl, —$NO_2$, —CN, —$SO_2CF_3$, —CO—($C_1$–$C_4$)-alkyl,

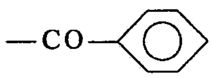

—$CO_2$—($C_1$–$C_8$)-alkyl, —NH—($C_1$–$C_4$)-alkyl, —N—[$C_1$–$C_4$)-alkyl]$_2$, —NHCO—($C_1$–$C_6$)-alkyl or $NHSO_2$—($C_1$–$C_4$)-alkyl,

$R_2$ represents H, Cl, Br or $CH_3$,

$X_1$ represents H, Cl or Br and

V represents $C_1$–$C_6$-alkyl which is optionally substituted by Cl, Br or $C_1$–$C_4$-alkoxy, or

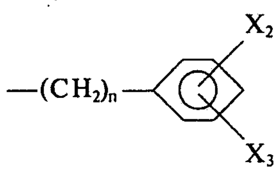

n represents 0, 1 or 2 and

$X_2$ and $X_3$ represent H, Cl, Br, $CH_3$ or $C_2H_5$,

at least one of the radicals $X_1$, $X_2$ and $X_3$ denoting Cl or Br, with the exception of the compounds of the formulae

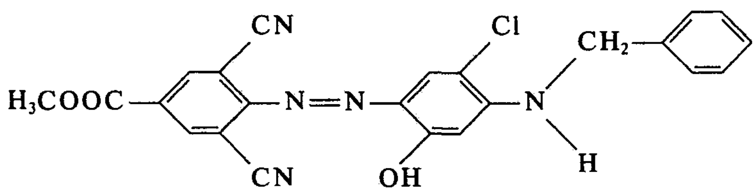

and

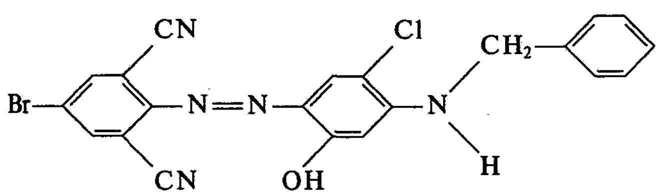

2. Azo dyestuffs according to Claim 1, characterised in that

$R_1$ represents Cl, Br, $CF_3$ or —$CO_2$—($C_1$–$C_8$)-alkyl,

V represents 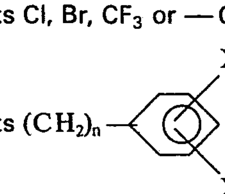 and

n represents 0 or 1,

and the remaining radicals are as defined above, and the abovementioned exceptions apply.

3. Azo dyestuffs according to Claims 1 or 2, characterised in that

$X_1$ represents hydrogen and

V represents 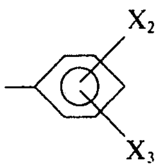

and the exceptions mentioned in Claim 1 apply.

4. Azo dyestuffs according to Claims 1 and 2, characterised in that

$X_1$ represents Cl or Br and

V represents 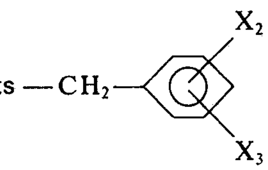

and the exceptions mentioned in Claim 1 apply.

5. Azo dyestuffs according to Claim 1, characterised in that

$R_2$ represents $CH_3$,

and the remaining radicals have the meanings given in Claim 1 without any exceptions.

6. Azo dyestuffs according to Claim 1, characterised in that

$X_2$ and $X_3$ represent Cl, Br, $CH_3$ or $C_2H_5$,

and the remaining radicals have the meanings given in Claim 1 without any exceptions.

7. Azo dyestuff according to Claim 1, characterised in that

$R_1$ represents Br,
$R_2$ represents $CH_3$,
$X_1$ represents Cl and
V represents benzyl.

8. Process for the preparation of azo dyestuffs according to Claim 1, characterised in that diazotised anilines of the formula

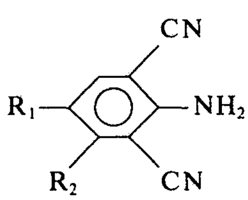

are coupled to coupling components of the formula

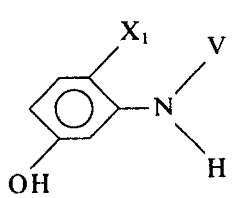

or, in o-halogenazo dyestuffs of the formula

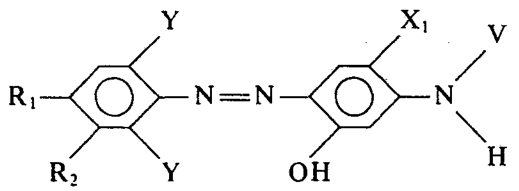

wherein

Y represents halogen, preferably bromine,

the halogen atoms are replaced by cyano groups in a manner which is known per se.

9. Use of the azo dyestuffs according to Claim 1 for dyeing and printing synthetic fibres.

**Revendications**

1. Colorants azoïques de formule:

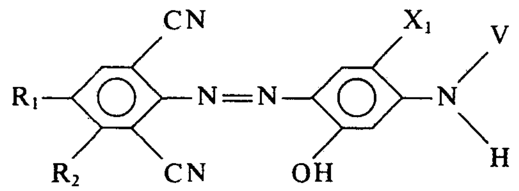

dans laquelle

$R_1$ représente F, Cl, Br, I, un groupe $CF_3$, alkyle en $C_1$ à $C_8$, cycloalkyle, $-NO_2$, $-CN$, $-SO_2CF_3$, $-CO-$(alkyle en $C_1$ à $C_4$),

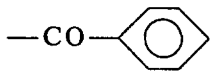

$-CO_2-$(alkyle en $C_1$ à $C_8$), $-NH-$(alkyle en $C_1$ à $C_4$), $-N$(alkyle en $C_1$ à $C_4$)$_2$, $-NHCO-$(alkyle en $C_1$ à $C_6$), $NHSO_2-$(alkyle en $C_1$ à $C_4$),

$R_2$ représente H, Cl, Br ou $CH_3$,

$X_1$ représente H, Cl ou Br,

V est un groupe alkyle en $C_1$ à $C_6$, éventuellement substitué par Cl, Br et un radical alkoxy en $C_1$ à $C_4$ ou un groupe

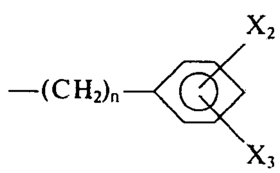

n a les valeurs 0, 1 et 2,

$X_2$, $X_3$ représentent H, Cl, Br, $CH_3$ ou $C_2H_5$,

au moins l'un des restes $X_1$, $X_2$ et $X_3$ représentant Cl ou Br, à l'exception des composés des formules:

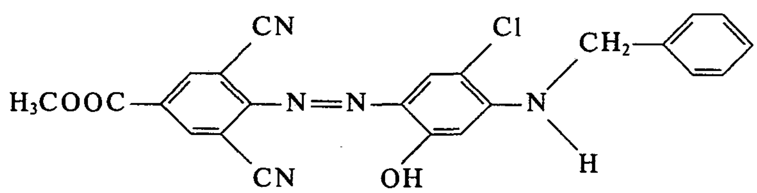

et

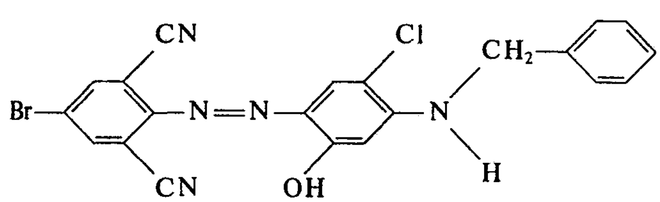

2. Colorants azoïques suivant la revendication 1, caractérisés en ce que:

$R_1$ représente Cl, Br, $-CF_3$ ou $-CO_2-$(alkyle en $C_1$ à $C_8$),

V représente 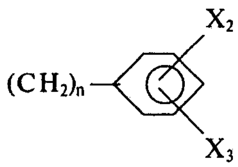 et

n a la valeur 0 ou 1, et les autres restes ont la définition donnée ci-dessus, les exceptions indiquées ci-dessus restant valables.

3. Colorants azoïques suivant les revendications 1 ou 2, caractérisés en ce que:

$X_1$ représente l'hydrogène, et

V est un groupe 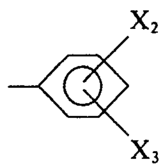

les exceptions, mentionnées dans la revendication 1, restant valables.

4. Colorants azoïques suivant les revendications 1 et 2, caractérisés ce que:

$X_1$ représente Cl ou Br, et

V est un groupe 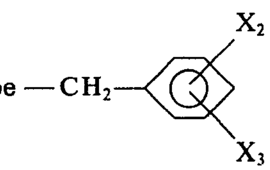 et

les exceptions mentionnées dans la revendication 1, restant valables.

5. Colorants azoïques suivant la revendication 1, caractérisés en ce que:

$R_2$ représente $CH_3$ et

les autres restes possèdent sans exception les définitions indiquées dans la revendication 1.

6. Colorants azoïques suivant la revendication 1, caractérisés en ce que:

$X_2/X_3$ représentent Cl, Br, $CH_3$ ou $C_2H_5$

et les autres restes possèdent sans exception les définitions indiquées dans la revendication 1.

7. Colorant azoïque suivant la revendication 1, caractérisé en ce que:

$R_1$ représente Br, $R_2$ représente $CH_3$, $X_1$ représente Cl et V est le groupe benzyle.

8. Procédé de production de colorants azoïques suivant la revendication 1, caractérisé en ce qu'on copule des anilines diazotées des formules:

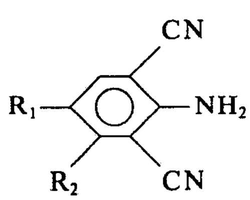

sur des copulants de formule:

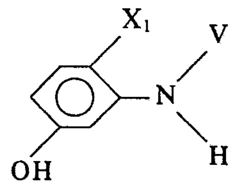

ou bien on échange d'une manière connue les atomes d'halogènes contre des groupes cyano dans des colorants o-halogénoazoïques de formule:

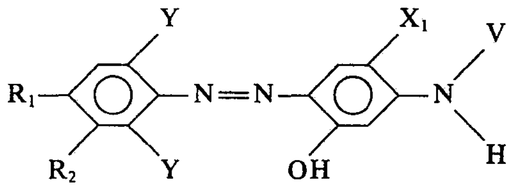

dans laquelle Y représente un halogène, de préférence le brome.

9. Utilisation des colorants azoïques suivant la revendication 1, pour la teinture et l'impression de fibres synthétiques.